# EUROPÄISCHE PATENTSCHRIFT

(11) **EP 3 994 803 B1**
(45) Veröffentlichungstag und Bekanntmachung des Hinweises auf die Patenterteilung: **05.07.2023**
(21) Anmeldenummer: 20731019.4
(22) Anmeldetag: 02.06.2020
(51) Int. Cl.: H04B 5/00, F03D 15/00, F03D 17/00

(54) **ÜBERTRAGUNG VON ENERGIE UND DATEN MITTELS EINES ÖLDURCHFÜHRUNGSRINGS**
TRANSMISSION OF POWER AND DATA BY MEANS OF AN OIL BUSHING RING
TRANSMISSION D'ÉNERGIE ET DE DONNÉES AU MOYEN D'UNE BAGUE DE PASSAGE D'HUILE

(30) Priorität: 05.07.2019 DE 102019209948
(43) Veröffentlichungstag der Anmeldung: 11.05.2022
(73) Patentinhaber: ZF Friedrichshafen AG, 88046 Friedrichshafen (DE)
(72) Erfinder: RIESS, Christian, 88239 Wangen (DE); KUTLUAY, Ümit, 88048 Friedrichshafen (DE); LANG, Philipp, 88214 Ravensburg (DE)
(74) Vertreter: ZF Friedrichshafen AG
(86) Internationale Anmeldenummer: PCT/EP2020/065202
(87) Internationale Veröffentlichungsnummer: WO 2021/004698

(56) Entgegenhaltungen:
- EP-A1- 1 488 139
- EP-A1- 3 020 965
- WO-A1-2011/047089

## Beschreibung

Die Erfindung betrifft eine Anordnung nach dem Oberbegriff von Anspruch 1.

Die Zustandsüberwachung von Planetengleitlagern in Windkraftgetrieben kann durch Sensorik und Telemetrie auf dem Planetenbolzen oder auf dem Planetenträger realisiert werden. Da es sich dabei um drehende Bauteile handelt, ist die Energieversorgung eine Herausforderung. Aufgrund der Unzugänglichkeit der Komponenten und der Anforderung von 20 Jahren Lebensdauer ist eine Energieversorgung durch Energiespeicher, etwa Batterien, nicht möglich. Energy-Harvesting Ansätze zur Gewinnung der Energie auf dem Planetenträger sind denkbar, bieten aber in vielen Fällen nicht genügend Leistung und sind zudem teuer und/oder aufgrund technischer Unzulänglichkeiten nicht serienreif.

Weiterhin sind aus anderen Gebieten Ansätze zur Energieübertragung zwischen drehenden Bauteilen mittels Schleifringen oder Drehübertragern, z.B. induktiven Kopplern, bekannt. Schleifringe sind aufgrund der Lebensdaueranforderung von 20 Jahren ungeeignet. Induktive Koppler sind in ringförmiger Ausführung in den Dimensionen eines Planetenträgers nicht verfügbar. Induktive Koppler in stabförmiger Ausführung haben den Nachteil, dass die Energie nicht kontinuierlich übertragen wird. Daher ist ein Zwischenspeicher notwendig und die Funktion ist im Betriebsmodus "Pendling" einer Windkraftanlage, welcher relevant für die Zustandsüberwachung ist, nicht gegeben.

Aus der Druckschrift EP 1 488 139 A1 ist ein U-förmiger Öldurchführungsring bekannt. Der Öldurchführungsring dient dazu, Öl von einer gehäusefesten Struktur zu einem drehbar gelagerten Planetenträger überzuleiten. Der Öldurchführungsring ist an dem Planetenträger fixiert und greift in eine Nut der gehäusefesten Struktur ein. Dadurch entsteht ein Hohlraum, der von der gehäusefesten Struktur, dem Öldurchführungsring, einem Lager des Planetenträgers und dem Planetenträger selbst gebildet wird. Dies ist problematisch, wenn der Planetenträger mit seiner Drehachse horizontal eingebaut wird. Das Öl zur Schmierung des Lagers sammelt sich dann in dem Hohlraum und kann nicht abfließen.

Aus der Druckschrift EP 3 020 965 A1 ist eine Anordnung nach dem Oberbegriff des Anspruchs 1 bekannt.

Der Erfindung liegt die Aufgabe zugrunde, die Energieversorgung von Sensorik in der Planetenstufe einer Windkraftanlage zu verbessern. Insbesondere soll eine dauerhafte Energieversorgung über die gesamte Lebensdauer der Anlage gewährleistet sein. Die Energieversorgung soll zudem unabhängig sein von den jeweils vorherrschenden Betriebsbedingungen.

Diese Aufgabe wird gelöst durch eine Anordnung nach Anspruch 1. Bevorzugte Weiterbildungen sind in den Unteransprüchen enthalten und ergeben sich aus den in den Figuren dargestellten Ausführungsbeispielen.

Die Anordnung umfasst eine gehäusefeste Struktur, die drehfest, vorzugsweise starr, d.h. derart, dass keinerlei Relativbewegungen möglich sind, in einem Getriebegehäuse fixiert ist, einen drehbar in der gehäusefesten Struktur gelagerten Planetenträger, einen Öldurchführungsring, ein erstes Mittel zur kontaktlosen Energieübertragung, im Folgenden Sender genannt, und ein zweits Mittel zur kontaktlosen Energieübertragung, im Folgenden Empfänger genannt. Der Sender ist also ausgebildet, kontaktlos Energie zu dem Empfänger zu übertragen. Mithin ist der Empfänger ausgebildet, die übertragene Energie zu empfangen. Dies schließt die Übertragung von Energie in Gegenrichtung nicht aus. Je nach Ausführungsform und Betriebszustand kann also der Sender auch Energie empfangen, die von dem Empfänger übertragen wird. Bei der übertragenen Energie handelt es sich vorzugsweise um elektrische Energie. Auch ist es möglich, dass neben der Energie Daten zwischen dem Sender und dem Empfänger - unidirektional oder bidirektional - übertragen werden.

Ein Öldurchführungsring ist ein Mittel zum Leiten von Schmierstoff zwischen zwei relativ zueinander verdrehbaren Komponenten, im Einzelnen zwischen einer Mündung einer Schmierstoffleitung einer ersten Komponente und einer Mündung einer Schmierstoffleitung einer zweiten Komponente. Die Mündung der Schmierstoffleitung der ersten Komponente und die Mündung der Schmierstoffleitung der zweiten Komponente sind außermittig angeordnet, d.h. ihre geometrische Mitte liegt jeweils außerhalb der Drehachse der ersten Komponente und der zweiten Komponente relativ zueinander. Insbesondere sind die Mündungen nicht rotationssymmetrisch zu der Drehachse.

Der Öldurchführungsring ist koaxial zu einer Drehachse des Planetenträgers angeordnet. Eine Mittelachse des Öldurchführungsrings ist identisch mit der Drehachse des Planetenträgers. Vorzugsweise verläuft der Öldurchführungsring rotationssymmetrisch zu der Drehachse des Planetenträgers und umschließt in Umfangsrichtung eine Eingangswelle, die drehfest mit dem Planetenträger verbunden ist, oder eine Sonnenwelle, die drehfest mit dem Sonnenrad der oben beschriebenen Planetenstufe verbunden ist. Dies bedeutet, dass die Eingangs- oder Sonnenwelle in axialer Richtung durch den Öldurchführungsring bzw. durch den genannten axial verlaufenden Hohlraum hindurchführt. Der Öldurchführungsring kann, wie in der Druckschrift EP 1 488 139 A1 offenbart, als U-förmiger Ring ausgestaltet sein.

Bei der ersten Komponente handelt es sich vorliegend um die gehäusefeste Struktur, bei der zweiten Komponente um den Planetenträger. Entsprechend bildet der Öldurchführungsring eine schmierstoffleitende Verbindung zwischen der gehäusefesten Struktur und dem Planetenträger. Der Öldurchführungsring ist entweder an dem Planetenträger fixiert und steht mit der gehäusefesten Struktur schmierstoffleitend in Verbindung, oder er ist an der gehäusefesten Struktur fixiert und steht mit dem Planetenträger schmierstoffleitend in Verbindung.

Die Erfindung löst das eingangs beschriebene Problem durch Integration des mindestens einen Empfängers in den Öldurchführungsring. Erfindungsgemäß weist der Öldurchführungsring daher den mindestens einen Empfänger auf. Der mindestens eine Sender ist in der gehäusefesten Struktur angeordnet.

Da der Öldurchführungsring in unmittelbarer Nähe der gehäusefesten Struktur verläuft, ermöglicht die Erfindung eine Anordnung von Sender und Empfänger in unmittelbarer Nähe zueinander. Zudem verläuft der Öldurchführungsring in Umfangsrichtung um eine Drehachse des Planetenträgers herum. Daher ist es mit der Erfindung möglich, Empfänger in benötigter Anzahl bereitzustellen, sodass auch im Betriebszustand "Pendling" eine zuverlässige Übertragung von Energie gewährleistet ist. Die Anordnung des mindestens einen Empfängers an dem Öldurchführungsring ist zudem im Hinblick auf den zur Verfügung stehenden Bauraum vorteilhaft.

In einer bevorzugten Weiterbildung der Erfindung besteht der Öldurchführungsring aus Kunststoff, vorzugsweise aus thermoplastischem Kunststoff, z.B. Polyamid. Neben den aus der Druckschrift EP 1 488 139 A1 bekannten Vorteilen vereinfacht ein aus Kunststoff bestehender Öldurchführungsring die Integration des mindestens einen Empfängers. So lässt sich der mindestens eine Empfänger während des Gießvorgangs des Öldurchführungsrings einsetzen. Als Gießverfahren eignet sich etwa thermoplastischer Spritzguss.

Eine darüber hinaus bevorzugte Weiterbildung sieht entsprechend vor, dass der mindestens eine Empfänger in den Öldurchführungsring eingegossen ist. Der mindestens eine Empfänger lässt sich in einen aus Kunststoff bestehenden Öldurchführungsring eingießen, allerdings ist ein eingegossener Empfänger auch mit anderen Materialien realisierbar.

Der mindestens eine Empfänger ist bevorzugt als elektrische Spule weitergebildet, der mindestens eine Sender als elektrische Spule oder als Permanentmagnet. Ein Permanentmagnet als Sender hat den Vorteil eines besonders einfachen Aufbaus, da keine Verkabelung notwendig ist.

Alternativ ist es möglich, die Energie induktiv zu übertragen. In dem Fall sind der mindestens eine Empfänger und der mindestens eine Sender als induktive Koppler weitergebildet. Dadurch lassen sich sowohl elektrischer Energie als auch von Daten übertragen. Insbesondere ist eine bidirektionale Übertragung möglich.

In einer darüber hinaus bevorzugten Weiterbildung ist der Planetenträger mit mindestens einem Sensor versehen. Der Sensor dient vorzugsweise der Zustandsüberwachung, etwa der Überwachung des Zustands eines Planetengleitlagers. Um den Sensor mit Energie zu versorgen, sieht die Weiterbildung mindestens ein Mittel zur Übertragung von Energie von dem mindestens einen Empfänger zu dem mindestens einen Sensor vor. Insbesondere kann es sich um ein Mittel zur Übertragung elektrischer Energie, etwa ein oder mehrere Kabel, handeln.

Um die Messdaten des mindestens einen Sensors auszuwerten, ist bevorzugt ein Mittel zum Übertragen der Messdaten vorgesehen. Um auch dieses mit Energie versorgen zu können, lässt sich ein Mittel zur Übertragung von Energie von dem mindestens einen Empfänger zu dem Mittel zur Übertragung der Messdaten in den Planetenträger integrieren. In diesem Fall werden sowohl der mindestens eine Sensor als auch das Mittel zum Übertragen der Messdaten über den mindestens einen Empfänger mit Energie versorgt.

Bevorzugte Ausführungsbeispiele der Erfindung sind in den Figuren dargestellt. Übereinstimmende Bezugsziffern kennzeichnen dabei gleiche oder funktionsgleiche Merkmale. Im Einzelnen zeigt:
Fig. 1 eine Anordnung mit Spule und Magnet; und
Fig. 2 eine Anordnung mit Spulen.

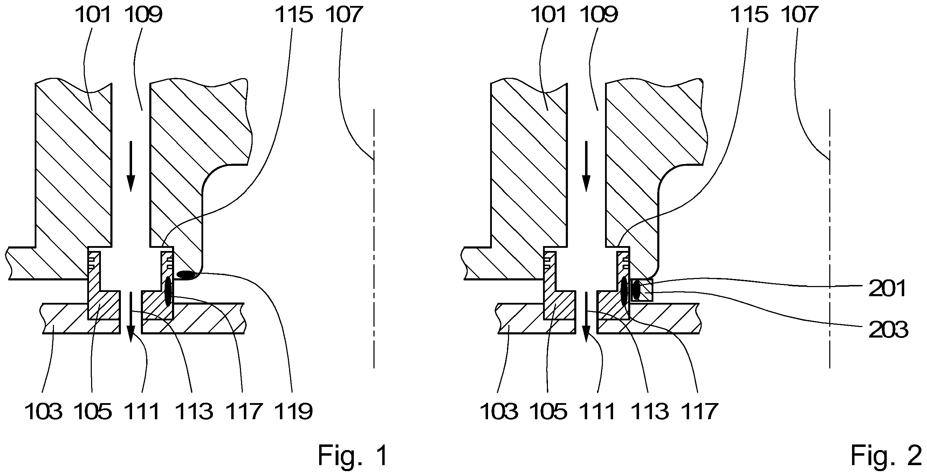

In den Figuren 1 und 2 dargestellt ist ein Getriebegehäuse 101, ein Planetenträger 103 und ein Öldurchführungsring 105. Der Planetenträger 103 ist um eine Drehachse 107 drehbar gelagert.

Das Getriebegehäuse 101 weist eine erste als Bohrung ausgeführte Ölleitung 109 auf. Eine zweite als Bohrung ausgeführte Ölleitung 111 befindet sich in dem Planetenträger 103. Da der Planetenträger 103 drehbar gelagert ist, drehen sich die erste Ölleitung 109 und die zweite Ölleitung 111 relativ zueinander.

Der Öldurchführungsring 105 dient dazu, Öl von der ersten Ölleitung 109 zu der zweiten Ölleitung 111 zu übertragen. Er ist an dem Planetenträger 103 fixiert und weist eine Bohrung 113 auf, die mit der zweiten Ölleitung 111 fluchtet. Dadurch kann Öl von dem Schmierstoffring in die zweite Ölleitung 111 eingeleitet werden.

Der Öldurchführungsring 105 ist im Querschnitt U-förmig und greift in eine Nut 115 des Getriebegehäuses 101 ein, sodass der Öldurchführungsring 105 und die Nut 115 einen ringförmigen Hohlraum ausbilden. In diesen Hohlraum mündet die erste Schmierstoffleitung 109.

Um elektrische Energie von dem Getriebegehäuse 101 zu dem Planetenträger 103 zu übertragen, ist der Öldurchführungsring 105 mit einer oder mehreren Spulen 117 versehen. Das Getriebegehäuse 101 weist Permanentmagneten 119 auf. Diese sind in unmittelbarer Nähe der Spulen 117 angeordnet. Dreht sich der Planetenträger 103, passieren die Spulen 117 daher die Permanentmagnete 119, sodass in den Spulen 117 eine elektrische Spannung induziert wird. Die induzierte Spannung dient der Versorgung von Sensorik in dem Planetenträger 113 mit elektrischer Energie.

Anstelle der Permanentmagnete 119 können, wie in Fig. 2 dargestellt, Spulen 201 verwendet werden. Die Spulen 201 sind in einen Träger 203 integriert, der an dem Getriebegehäuse 101 befestigt ist. Die Spulen 117 des Öldurchführungsrings 105 und die Spulen 201 des Getriebegehäuses 101 sind so angeordnet, dass sie induktiv gekoppelt sind.

Ein von den Spulen 201 des Getriebegehäuses 101 erzeugtes Magnetfeld induziert also in Abhängigkeit von einer Drehwinkelstellung des Planetenträgers 103 eine elektrische Spannung in den Spulen 117 des Öldurchführungsrings 105. Umgekehrt induziert ein Magnetfeld bzw. eine Magnetfeldänderung der Spulen 117 des Öldurchführungsrings 115 je nach Drehwinkelstellung des Planetenträgers 103 eine elektrische Spannung in den Spulen 201 des Getriebegehäuses 101. Dadurch lassen sich bidirektional, d.h. ausgehend von dem Getriebegehäuse 101 in Richtung des Planetenträgers 103 und in umgekehrter Richtung ausgehend von dem Planetenträger 103 in Richtung des Getriebegehäuses, elektrische Energie und Daten übertragen.

### Bezugszeichen

- 101: Getriebegehäuse
- 103: Planetenträger
- 105: Öldurchführungsring
- 107: Drehachse
- 109: Ölleitung
- 111: Ölleitung
- 113: Bohrung
- 115: Nut
- 117: Spule
- 119: Permanentmagnet
- 201: Spule
- 203: Träger

## Patentansprüche

1. Anordnung mit einer gehäusefesten Struktur (101), einem drehbar in der gehäusefesten Struktur (101) gelagerten Planetenträger (103), einem Öldurchführungsring (105), einem ersten Mittel (119, 201) und einem zweiten Mittel (117) zur kontaktlosen Energieübertragung; wobei
der Öldurchführungsring (105) eine schmierstoffleitende Verbindung zwischen der gehäusefesten Struktur (101) und dem Planetenträger (103) bildet;
die gehäusefeste Struktur (101) das erste Mittel (119, 201) aufweist; und **dadurch gekennzeichnet, dass** der Öldurchführungsring (105) das zweite Mittel (117) aufweist.

2. Anordnung nach Anspruch 1; wobei der Öldurchführungsring (105) aus Kunststoff besteht.

3. Anordnung nach einem der vorhergehenden Ansprüche; wobei das erste Mittel (117) in den Öldurchführungsring (105) eingegossen ist.

4. Anordnung nach einem der vorhergehenden Ansprüche; wobei
es sich bei dem ersten Mittel (119, 201) um eine Spule oder einen Permanentmagneten handelt; wobei
es sich bei dem zweiten Mittel (117) um eine Spule handelt.

5. Anordnung nach einem der vorhergehenden Ansprüche; wobei der Planetenträger (103) mindestens einen Sensor und mindestens ein Mittel zur Übertragung von Energie von dem mindestens zweiten Mittel (117) zu dem mindestens einen Sensor aufweist.

## Claims

1. Arrangement with a structure (101) fixed to a housing, a planet carrier (103) mounted rotatably in the structure (101) fixed to the housing, an oil bushing ring (105), a first means (119, 201) and a second means (117) for contactless power transmission; wherein the oil bushing ring (105) forms a lubricant-conducting connection between the structure (101) fixed to the housing and the planet carrier (103); the structure (101) fixed to the housing has the first means (119, 201); and **characterized in that** the oil bushing ring (105) has the second means (117).

2. Arrangement according to Claim 1; wherein the oil bushing ring (105) is composed of plastic.

3. Arrangement according to either of the preceding claims; wherein the first means (117) is cast into the oil bushing ring (105).

4. Arrangement according to one of the preceding claims; wherein the first means (119, 201) is a coil or a permanent magnet; wherein the second means (117) is a coil.

5. Arrangement according to one of the preceding claims; wherein the planet carrier (103) has at least one sensor and at least one means for transmitting power from the at least second means (117) to the at least one sensor.

## Revendications

1. Arrangement comprenant une structure (101) solidaire d'un boîtier, un porte-satellites (103) monté dans la structure (101) solidaire d'un boîtier, une bague de passage d'huile (105), un premier moyen (119, 201) et un deuxième moyen (117) de transmission d'énergie sans contact ;
la bague de passage d'huile (105) formant une liaison de conduction de lubrifiant entre la structure (101) solidaire d'un boîtier et le porte-satellites (103) ;
la structure (101) solidaire d'un boîtier possédant le premier moyen (119, 201) ; et **caractérisé en ce que** la bague de passage d'huile (105) possède le deuxième moyen (117) .

2. Arrangement selon la revendication 1, la bague de passage d'huile (105) se composant de matière plastique.

3. Arrangement selon l'une des revendications précédentes, le premier moyen (117) étant moulé dans la bague de passage d'huile (105).

4. Arrangement selon l'une des revendications précédentes ;
le premier moyen (119, 201) étant une bobine ou un aimant permanent ;
le deuxième moyen (117) étant une bobine.

5. Arrangement selon l'une des revendications précédentes, le porte-satellites (103) possédant au moins un capteur et au moins un moyen destiné à la transmission d'énergie de l'au moins un deuxième moyen (117) à l'au moins un capteur.
